Europäisches Patentamt

European Patent Office

Office européen des brevets

(11) Publication number: **0 170 810 B1**

# EUROPEAN PATENT SPECIFICATION

(45) Date of publication of patent specification: **12.08.92**  (51) Int. Cl.⁵: **G01T 1/29**

(21) Application number: **85106680.3**

(22) Date of filing: **30.05.85**

(54) **Irradiation image erase unit for use with stimulable phosphor sheet.**

(30) Priority: **01.06.84 JP 112530/84**
**01.06.84 JP 112531/84**
**01.06.84 JP 112532/84**
**01.06.84 JP 112533/84**
**01.06.84 JP 112534/84**
**26.03.85 JP 62935/84**

(43) Date of publication of application:
**12.02.86 Bulletin  86/07**

(45) Publication of the grant of the patent:
**12.08.92 Bulletin  92/33**

(84) Designated Contracting States:
**DE FR NL**

(56) References cited:
**EP-A- 0 077 676      EP-A- 0 125 800**
**GB-A- 2 136 260      US-A- 2 854 905**
**US-A- 3 293 432      US-A- 3 409 292**
**US-A- 3 444 372      US-A- 3 538 829**
**US-A- 3 941 471**

(73) Proprietor: **FUJI PHOTO FILM CO., LTD.**
**210 Nakanuma Minami Ashigara-shi**
**Kanagawa 250-01(JP)**

(72) Inventor: **Yamada, Sadami c/o Fuji Photo Film**
**Co., Ltd.**
**798 Miyanodai Kaisei-machi**
**Ashigarakami-gun Kanagawa-ken 258(JP)**
Inventor: **Kawai, Yasuhiro c/o Fuji Photo Film**
**Co., Ltd.**
**798 Miyanodai Kaisei-machi**
**Ashigarakami-gun Kanagawa-ken 258(JP)**
Inventor: **Yoshimura, Ryoichi c/o Fuji Photo**
**Film Co., Ltd.**
**798 Miyanodai Kaisei-machi**
**Ashigarakami-gun Kanagawa-ken 258(JP)**
Inventor: **Arakawa, Satoshi c/o Fuji Photo Film**
**Co., Ltd.**
**798 Miyanodai Kaisei-machi**
**Ashigarakami-gun Kanagawa-ken 258(JP)**
Inventor: **Matsuda, Terumi c/o Fuji Photo Film**
**Co., Ltd.**
**798 Miyanodai Kaisei-machi**
**Ashigarakami-gun Kanagawa-ken 258(JP)**

(74) Representative: **Kador & Partner**
**Corneliusstrasse 15**
**W-8000 München 5(DE)**

## Description

The present invention relates to an irradiation image erase unit for use with a stimulable phosphor sheet in an irradiation image recording and reproducing system, and more particularly to an irradiation image erase unit for the system in which stimulable phosphor sheet with an irradiation image stored therein is exposed to stimulating rays, and light is emitted from the stimulable phosphor sheet in proportion to the stored irradiation energy and read out by an optical image read-out device for conversion into electric signals representing the irradiation image. The irradiation image erase unit is arranged such that when the irradiation image which remains on the stimulable phosphor sheet after the irradiation image has been read out is to be erased upon exposure to erasure light, the erasure light is prevented from leaking toward the image read-out device, and the erasure light from an erasure light source is reflected to erase the remaining image. During such a process, the heat radiation from the erasure light source is forcibly discharged out to protect the stimulable phosphor sheet from adverse effects of the heat thereon.

There has in recent years been proposed an irradiation image recording and reproducing system in which an irradiation image of an object can be produced by using a stimulable phosphor. The stimulable phosphor, when exposed to an irradiation such as X-rays, $\alpha$-rays, $\beta$-rays, $\gamma$-rays, cathode rays, or ultraviolet rays, stores a part of the energy of the irradiation. When the stimulable phosphor exposed to the radiation is exposed to stimulating rays such as visible light, the stimulable phosphor emits light in proportion to the stored energy of the radiation. The irradiation image recording and reproducing system employs such a stimulable phosphor. More specifically, the irradiation image of an object such as a human body is stored in a sheet having a stimulable phosphor (hereinafter referred to as a "stimulable phosphor sheet" or a "phosphor sheet"), and then the stimulable phosphor sheet is scanned with stimulating rays such as a laser beam to cause the stimulable phosphor sheet to emit light representative of the irradiation image. The emitted light is photoelectrically detected and converted to an electric image signal which is processed to reproduce a visible image on a recording medium such as a photographic light-sensitive material or on a display unit such as a cathode ray tube (CRT). The aforesaid irradiation image recording and reproducing system is disclosed in Japanese Laid-Open Patent Publication. No. 55-12429 or 56-11395, for example.

The irradiation image recording and reproducing system of the type described above is of greater practical advantage than conventional radiographic systems using a combination of an intensifying screen and an X-ray film in that images can be recorded in a wide range of radiation exposure. More specifically, it is known that the amount of light emitted from a stimulable phosphor upon stimulation thereof is proportional in a highly wide range to the amount of irradiation to which the stimulable phosphor has been exposed. Therefore, even if the amount of radiation to which the stimulable phosphor is exposed varies widely under various conditions, irradiation images free from such exposure variations can be obtained by selecting a suitable read-out gain in the photoelectric transducer for reading and converting the emitted light into an electric signal, and processing the electric signal into a visible image on a recording medium such as photographic light-sensitive material or on a display unit such as a CRT.

The irradiation image recording and reproducing system is capable of processing a converted electric signal to produce a visible image on a recording medium or a display unit so that the irradiation image can well be observed for diagnostic purpose. In this system, the stimulable phosphor sheet does not serve as a final image recording medium, but as a temporary image storage medium for eventually transferring images to the final recording medium or display unit. Therefore, the stimulable phosphor sheet can be used repeatedly, and is economical and convenient if in repetitive use.

To reuse the stimulable phosphor sheet, the residual irradiation energy on the stimulable phosphor sheet after the irradiation image has been read out by stimulating rays is discharged by exposure to light having a wavelength within the stimulating wavelength for the stimulable phoshpor constituting the stimulable phosphor sheet. The erasure of the irradiation energy from the stimulable phosphor sheet is disclosed in U.S. Patent No. 4,400,619, Japanese Laid-Open Patent Publication No. 56-11392 or 56-12599, for example, and in EP-A-125,800 published after the priority date of the present application.

More specifically, it is necessary to discharge all of the irradiation energy remaining on the stimulable phosphor sheet in order to erase any residual irradiation image. Therefore, the residual image should be completely erased by being exposed to as much intensive light emitted from an erasure light source as possible because if any irradiation image remained on the phosphor sheet, it would adversely affect a next irradiation image of the object to be stored on the phosphor sheet, and no accurate image would be available of the object.

An irradiation image read-out system designed to meet the above requirement includes an image read-out unit for reading out an image which has been stored in a reusable stimulable phosphor sheet by exposing it to an irradiation passing through an object, and an image erasure unit for discharging residual irradiation energy from the stimulable phosphor sheet after the image has been read out so as to allow the stimulable phosphor sheet to be reused for recording a next irradiation image. With the image read-out unit and the image erasure unit combined into one system, the system is compact in size and can be installed in a small space, and hence it is quite practical and convenient in use.

In such an irradiation image read-out system, the image read-out unit and the image erasure unit should preferably be disposed as closely to each other as possible for making system compact. However, if the image read-out unit and the image erasure unit were positioned so closely to each other that there would be no space therebetween, then certain problems would arise. When the stored image is to be read out, the stimulable phosphor sheet is exposed to stimulating rays to cause it to emit light in the pattern of the stored image, and the interior of the image read-out unit should be kept as dark as possible. The image erasure unit houses therein a light source which is as intensive as possible for discharging all of the remaining irradiation energy stored in the stimulable phosphor sheet. If any light from the image erasure unit leaked into the image read-out unit positioned closely to the image erasure unit, then the image could not be read out accurately by the image read-out unit, and no accurate irradiation image could not be obtained.

In order to erase the residual image information completely and in a short time from the phosphor sheet with the erasure light, an increased number of erasure light sources and an increased amount of erasure light should be employed to generate intensive erasure light. The increased number of erasure light sources and the increased amount of erasure light, however, tend to heat the image erasure unit excessively. The image erasure unit, the stimulable phosphor sheet, and surrounding components are therefore liable to be damaged by the heat of the erasure light emitted. In addition, the generation of the intensive erasure light requires a large-size power supply which makes the entire system large in size and which also makes it difficult to maintain and service the system.

If the image erasure unit is to be more compact and installed in a smaller space, the number of light sources for emitting erasure light will be restricted and the amount of erasure light emitted will be reduced. Therefore, the stimulable phosphor sheet carrying a residual image to be erased should remain placed in the image erasure unit for an increased period of time. As a result, the cyclic period in which to use the stimulable phosphor sheet for the storage of an irradiation image will be increased.

It is a primary object of the present invention to provide an irradiation image erase unit for erasing a residual irradiation image from a stimulable phosphor sheet by exposing the same to erasure light in an irradiation image recording and read-out system having an image read-out unit for irradiating stimulating rays to the stimulable phosphor sheet to cause the same to emit light representative of the irradiation image stored therein, for detecting the light emitted from the stimulable phosphor sheet, and for converting said emitted light photoelectrically to an electric signal, the irradiation image erase unit comprising: a casing having an inlet slot for passage thererough of the stimulable phosphor sheet fed from the image read-out unit into the casing; erasure light source means disposed in the casing for emitting the erasure light; and at least one feeder means mounted on the casing at the inlet slot for delivering the stimulable phosphor sheet into the casing, wherein said feeder means comprises a pair of rollers disposed in confronting relation to said inlet slot, said rollers being held in rolling contact with each other for substantially closing said inlet slot from said image read-out unit, and a resilient member is mounted on said casing for normally urging said rollers against each other.

In one embodiment, irradiation image erase unit comprises heat radiator means mounted on the casing for forcibly radiating heat out of the casing.

In a further embodiment, the casing has inner panel surfaces for reflecting the light emitted from the erasure light source means.

In still a further embodiment the casing has a heat radiating opening defined in at least one panel thereof, and a reflecting plate disposed between the panel and the erasure light source means in confronting relation to the opening.

The above and other objects, features and advantages of the present invention will become more apparent from the following description when taken in conjunction with the accompanying drawings in which preferred embodiments of the present invention are shown by way of illustrative example.

Fig. 1 is a perspective view of an irradiation image recording and read-out system;

Fig. 2 is a vertical cross-sectional view of the irradiation image recording and read-out system shown in Fig. 1;

Fig. 3 is an enlarged vertical cross-sectional view of an irradiation image erase unit for a stimulable phosphor sheet according to the present invention;

Fig. 4 is a perspective view, partly cut away, of nip rollers each made of a resilient material such as rubber which can be incorporated in the irradiation image erase unit;

Fig. 5 is a perspective view, partly cut away, of nip rollers each made of a resilient material such as rubber and a fabric with relatively long thread ends projecting on its surface, the nip rollers being adapted to be incorporated in the irradiation image erase unit;

Fig. 6 is a side elevational view, partly cut away, of the irradiation image erase unit;

Fig. 7 is a perspective view, partly cut away, of the irradiation image erase unit;

Fig. 8 is a side elevational view of the irradiation image erase unit shown in Fig. 3;

Fig. 9 is a perspective view of the irradiation image erase unit shown in Fig. 3; and

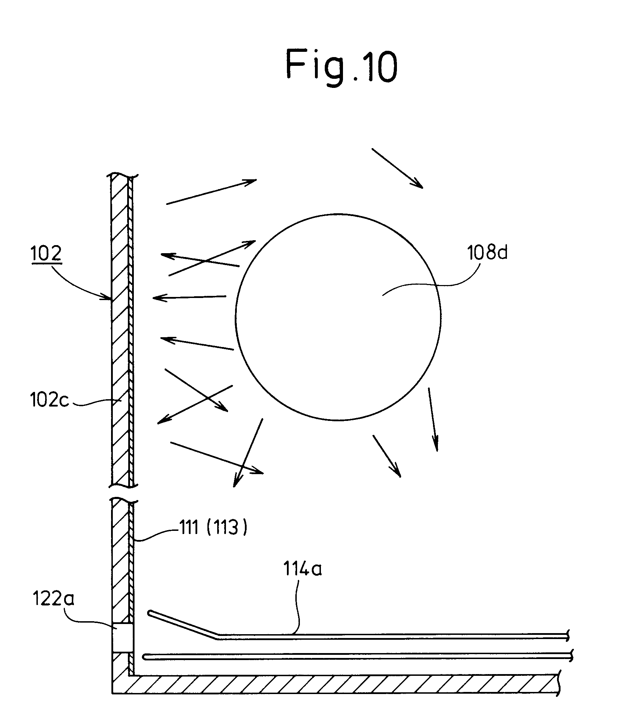

Fig. 10 is a fragmentary view showing the relationship between a mirrored layer or diffusion layer on the inner surface of a casing side wall, a light source, and reflected light.

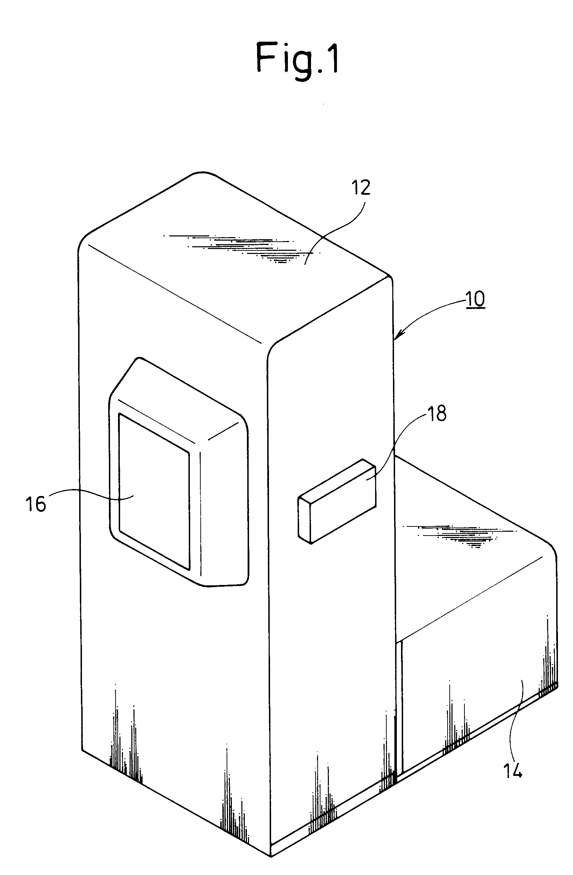

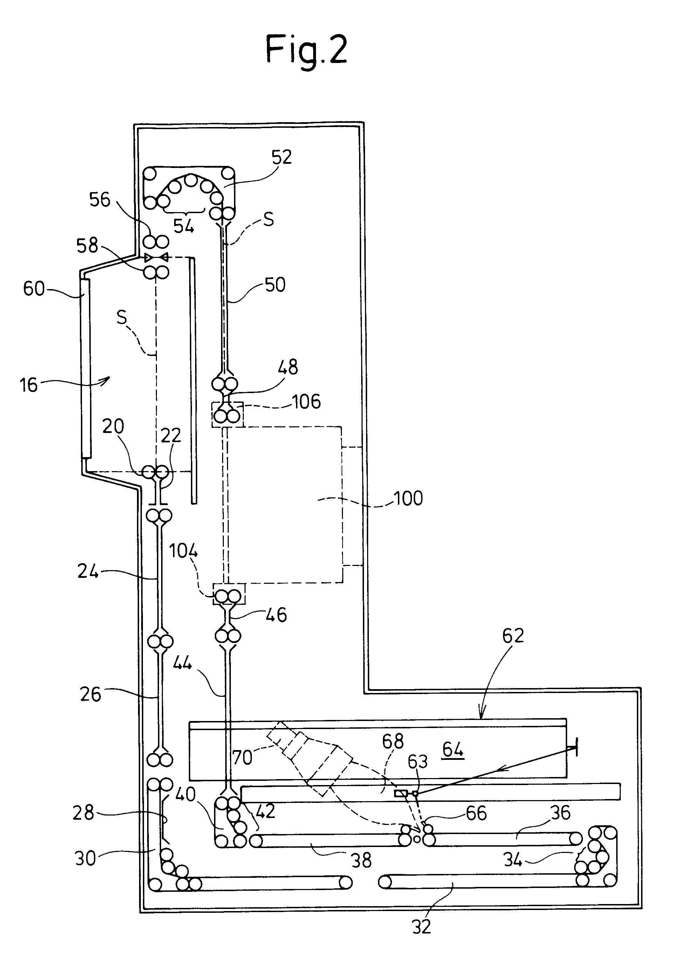

An irradiation image recording and read-out system incorporating therein an image recording unit, an image read-out unit, and an image erase unit of the invention will first be described with reference to Figs. 1 and 2.

The reference numeral 10 in Fig. 1 denotes an upstanding irradiation image recording and read-out system including a first vertical housing 12 and a second horizontal housing 14. The first housing 12 supports an exposure unit or image recording unit 16 on a front upper portion thereof and a control unit 18 on a side upper wall thereof.

The arrangements in the first and second housings 12, 14 will be described with reference to Fig. 2. A pair of sheet reception rollers 20 for receiving a stimulable phosphor sheet on which an image is recorded is disposed in a lower portion of the image recording unit 16. Below the roller pair 20, there are disposed a first guide member 22 and a second guide member 24 confronting the first guide member 22 and extending in the vertical direction. A pair of confronting third guide members 26 is located beneath the first and second guide members 22, 24 with another roller pair disposed therebetween. Roller pairs are rotatably disposed between the third guide members 26 and a fourth guide member 28 disposed therebelow.

A first endless feed belt 30 is disposed partly against the fourth guide member 28 and has an angularly bent configuration at an inner corner of the first housing 12. The first feed belt 30 terminates at a lower central portion of the second housing 14. A second endless feed belt 32 is disposed in a slightly spaced relation to the terminal end of the first endless feed belt 30. The second endless feed belt 32 is angularly bent in an upward direction at an inner corner of the second housing 14. A group of four rollers 34 is held against the inner bent portion of the second feed belt 32. A pair of third and fourth endless feed belts 36, 38 extends horizontally in slightly spaced relation to the terminal end of the feed belt 32. A fifth endless belt 40 bent upwardly is located in the vicinity of the terminal end of the fourth feed belt 38. A group of three rollers 42 is held against a surface of the belt 40.

The fifth belt 40 and the roller group 42 are located beneath a pair of confronting guide members 44 disposed below a pair of confronting guide members 46 with a pair of confronting rollers interposed therebetween. Above the guide members 46, there is positioned an irradiation image erase unit 100 of the present invention which will be described in detail later on. Relatively short guide members 48 are disposed above the irradiation image erase unit 100, and other guide members 50 are located above the guide members 48. An endless feed belt 52 of a bent configuration is disposed in the vicinity of the terminal ends of the guide members 50 in a substantially top portion of the first housing 12. A roller group 54 is held against a curved inner run of the feed belt 52. Below the feed belt 52 and the roller group 54, there are disposed two pairs of rollers 56, 58 for supplying a stimulable phosphor sheet into the image recording unit 16.

The feed system for a stimulable phosphor sheet has the above basic construction in the irradiation image recording and read-out system 10.

The image read-out unit, designated at 62, positioned in relation to the feed system will be described.

The image read-out unit 62 is basically composed of a laser beam source 64, a scanning optical system 63 including a galvanometer mirror for scanning a laser beam emitted from the laser beam source 64 over a stimulable phosphor sheet, a reflecting mirror 66 for collecting light, and a light collecting optical element 68 for effectively collecting part of light emitted from the stimulable phosphor sheet by the scanning laser beam, and also light reflected by the reflecting mirror 66. A photomultiplier (photoelectric conversion device) 70 is mounted on the top of the light collecting optical element 68.

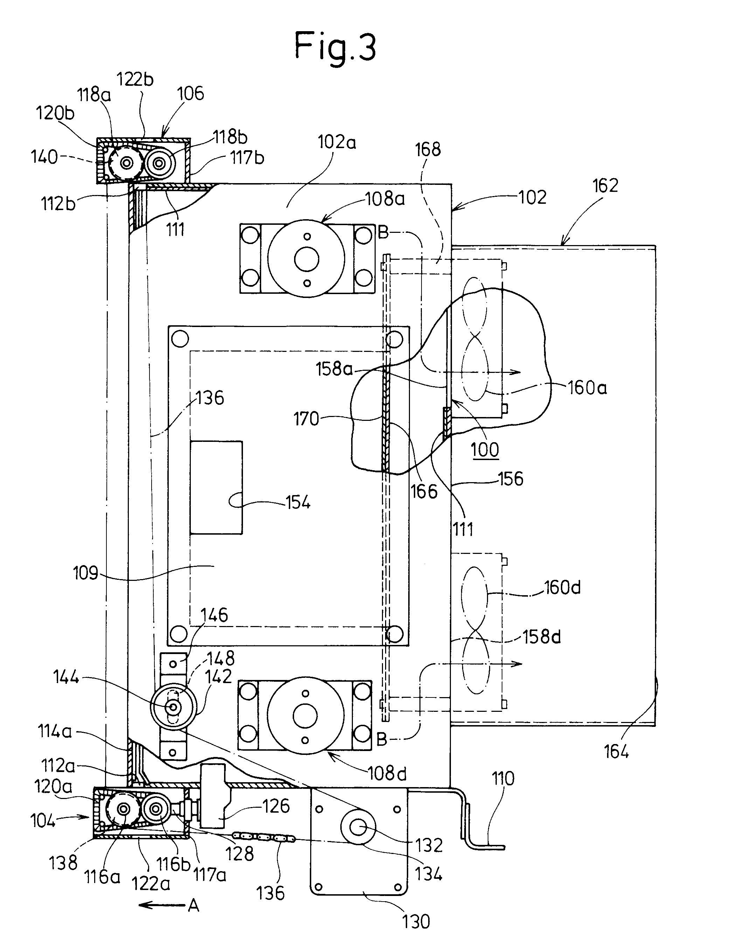

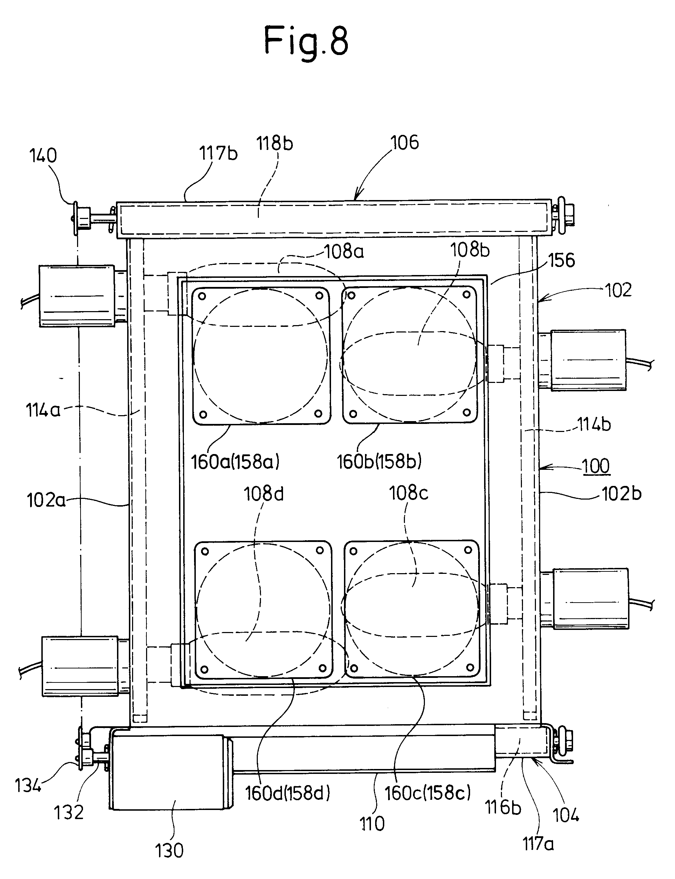

The irradiation image erase unit 100 according to the present invention is shown in detail in Fig. 3. The irradiation image erase unit 100 essentially comprises a casing 102, a pair of feeders 104, 106 mounted on the lower and upper ends, respectively, of the casing 102, and first through fourth light sources 108a through 108d (Fig. 8) for emitting erasure light into the casing 102. The light sources 108a, 108d are mounted on a side panel 102a of the casing 102 and widely spaced from each other in parallel relation, while the light sources 108b, 108c are mounted on an opposite side panel 102b of the casing 102 and closely spaced from each other in parallel relation. Thus, the light sources 108b, 108c are located vertically between the light sources 108a, 108d. The side panel 102a has a large service opening which is closed by an openable cover 109 fastened as by screws to the side panel 102a. An angle 110 is fixed to the lower end of the casing 102. The casing 102 can be fixed to the first housing 12 by attaching the angle 110 to the first housing 12.

The casing 102 has inlet and outlet slots 112a, 112b defined in upper and lower panels thereof adjacent to the feeders 104, 106, respectively. Guide members 114a, 114b are disposed in parallel relation in the casing 102 and extend from the inlet slot 112a to the outlet slot 112b as shown in Fig. 8. The feeder 104 is composed of a pair of nip rollers 116a, 116b held in rolling contact with each other and enclosed in a first cover 117a attached to the lower panel of the casing 102. Likewise, the feeder 106 is composed of a pair of nip rollers 118a, 118b held in rolling contact with each other and enclosed in a second cover 117b attached to the upper panel of the casing 102. Resilient members 120a, 120b such as coil springs are engaged by pins attached to the covers 117a, 117b, respectively, and held in engagement with the rotatable shafts of the nip rollers 116b, 118b for normally urging them to be forcibly pressed against the nip rollers 116a, 118a, respectively.

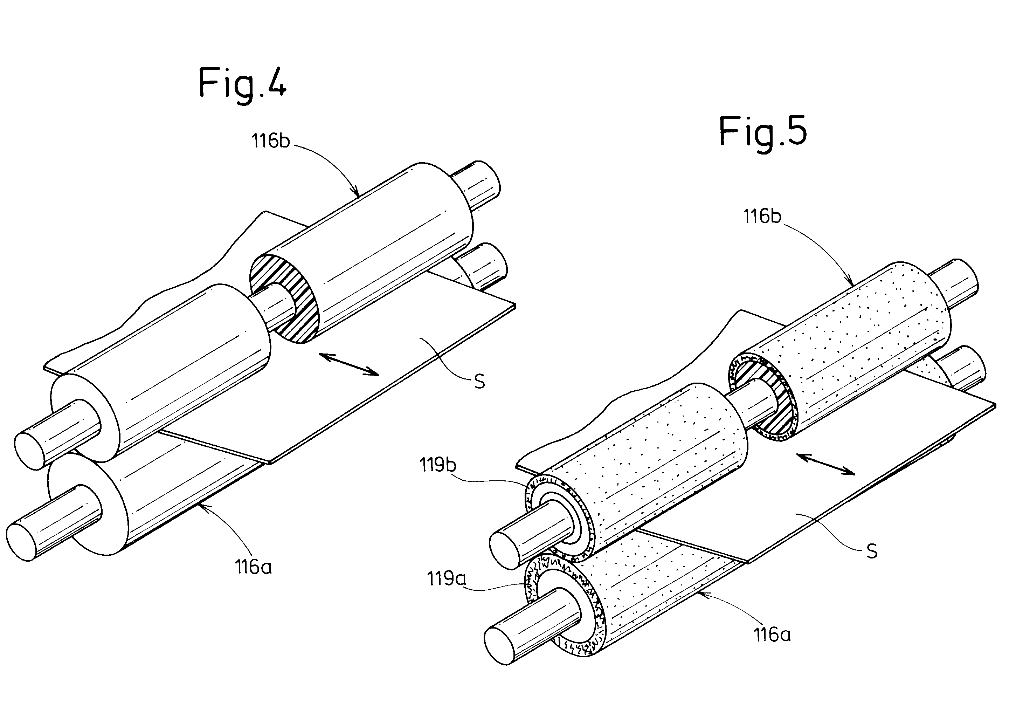

Each of the nip rollers 116a, 116b (118a, 118b) is made of a flexibly resilient material such as rubber as shown in Fig. 4, or is made of such a flexibly resilient material covered on its surface with fabrics 119a or 119b having relatively long thread ends projecting from its surface as shown in Fig. 5.

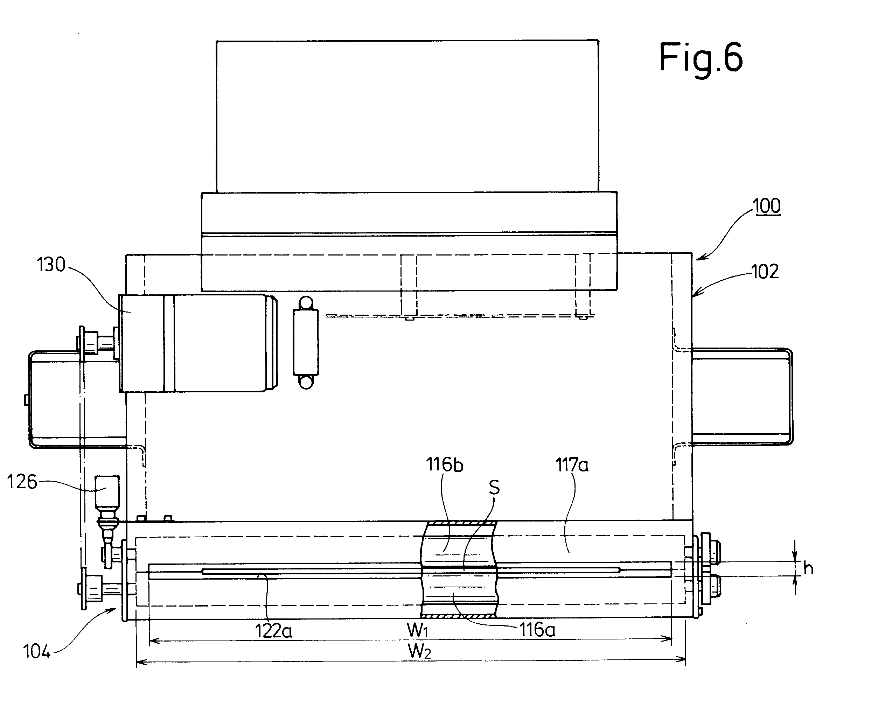

The covers 117a, 117b have slots 122a, 122b, respectively, aligned with the inlet and outlet slots 112a, 112b, respectively. As shown in Fig. 6, at least the slot 122a aligned with the inlet slot 112a has a width $W_1$ smaller than the width $W_2$ of the nip rollers 116a, 116b. The width $W_1$ of the slot 122a is selected to be slightly larger than the width of the stimulable phosphor sheet which passes through the slot 122a. The axial length of the nip rollers 116a, 116b is larger than the width of the stimulable phosphor sheet so that the axial ends of the nip rollers 116a, 116b are held against each other when the stimulable phosphor sheet is pinched therebetween. The slot 122a has a height h of a minimum dimension for allowing the stimulable phosphor sheet to be inserted therethrough.

As shown in Fig. 3, a microswitch 126 mounted on the casing 102 as a limit switch has a detecting arm 128 held in sliding contact with the nip roller 116b. A motor 130 is fixed to the casing 102 closely to the angle 110 and has a rotatable shaft 132 to which a first sprocket 134 is fixed. A chain 136 is trained around the first sprocket 134, a second sprocket 138 fixed coaxially to the nip roller 116a, and a third sprocket 140 fixed coaxially to the nip roller 118a. The chain 136 is also trained around a fourth tensioning sprocket 142 rotatably mounted on the side panel 102a of the casing 102. The fourth sprocket 142 is supported on a shaft 144 displaceable in a slot 148 defined in a holder 146 attached to the side panel 102a for giving the chain 136 an optimum tension.

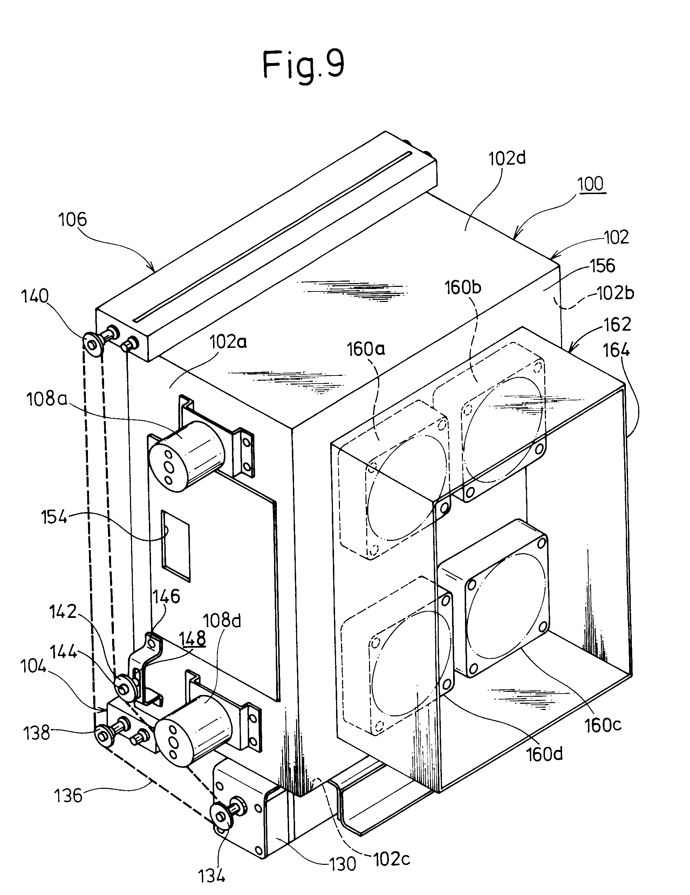

The irradiation image erase unit 100 includes a heat radiator for forcibly cooling the casing 102. As shown in Figs. 3, 8 and 9, the heat radiator is composed of a relatively small opening 154 defined in the cover 109 fastened to the casing 102, a plurality of openings 158a through 158d (four openings in the illustrated embodiment) defined in a side panel 156 of the casing 102 and each larger than the opening 154, and a plurality of motor-driven fans 160a through 160d (four motor-driven fans in the illustrated embodiment) disposed respectively in the openings 158a through 158d and drivable in synchronism with energization of the sources 108a through 108d. A duct 162 of a rectangular cross section is mounted on the side panel 156 in surrounding relation to the openings 158a through 158d and hence the motor-driven fans 160a through 160d. The duct 162 has an opening 164 at its distal end extending through the first housing 12, the opening 164 communicating with the exterior of the irradiation image recording and read-out system 10 (Fig. 2). The motor-driven fans 160a through 160d may be mounted on the distal end of the duct 162 disposed out of the system 10, rather than on the side panel 156 over the openings 158a through 158d. The number of motor-driven fans employed may appropriately be selected dependent on the r.p.m. thereof and in view of other considerations.

The side panels 102a through 102d and the side panel 156 of the casing 102 have inner surfaces of a mirror finish. Where the casing 102 is constructed of a metal sheet, it is preferable to grind the inner surfaces of the casing 102 to a mirror finish. However, the casing 102 may be made of any suitable material, and the inner surfaces of the side panels 102a through 102d and the side panel 156 may be coated with thin films 111 of a mirror finish, as illustrated in Fig. 3.

A reflecting plate 166 smaller in area than the side panel 156 is disposed in the casing 102 and mounted on the side panel 156 by bolts 168 threaded at both ends thereof or other fasteners, the reflecting plate 166 being spaced from the inner surface of the side panel 156. The reflecting plate 166 is positioned as closely to the light sources 108a through 108d as possible, and has a surface 170 of a mirror finish which faces the light surfaces 108a through 108d. Alternatively, the surface of the reflecting plate 166 facing the light sources 108a through 108d may be coated with a thin reflecting film or provided with a thin reflecting sheet.

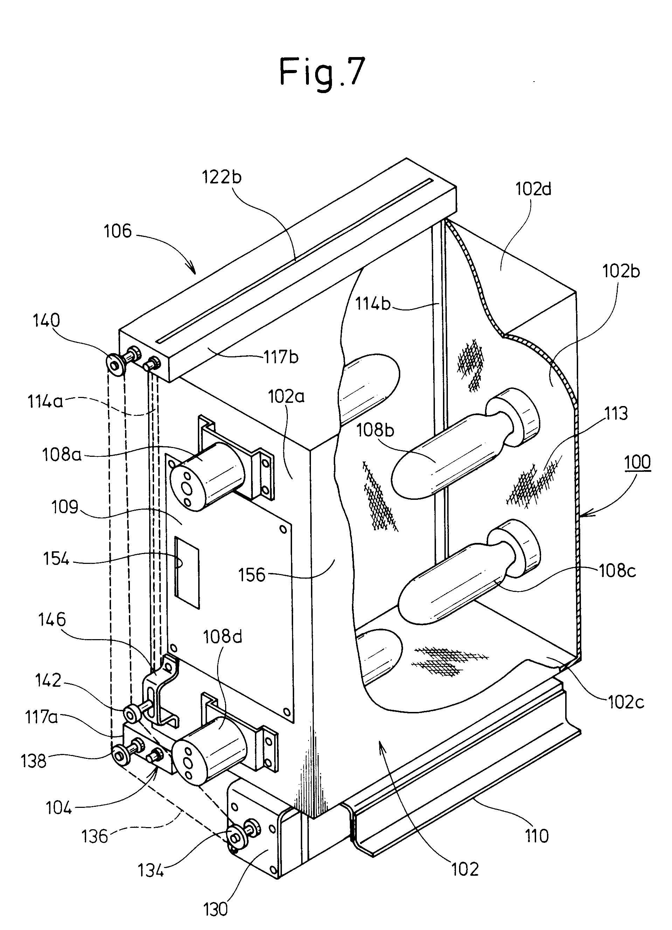

The inner wall surfaces 111 of the casing 102 and the reflecting surface 170 of the reflecting plate 166 may also be capable of diffusing light falling thereon. Such a diffusive reflecting surface 113 may be disposed substantially fully over the side panel of the casing 102 which faces the stimulable phosphor sheet in the casing 102. It is preferable however that all of the substantially entire inner surfaces of the side panels of the casing 102 comprise such diffusive reflecting surfaces 113 as shown in Fig. 7.

The diffusive reflecting surfaces 113 may be produced in the casing 102 in various ways. For example, the inner panel surfaces of the casing 102 may be coated with a paint containing a white pigment. As an alternative, panels containing a white pigment may be applied to the inner panel surfaces of the casing 102. Where the inner panel surfaces of the casing 102 are coated with a paint containing a white pigment, it is preferable to coat the paint in a baking finish process. The panel containing a white pigment may comprise a panel with a white pigment paste mixed therein, or a panel composed of a support painted with a white pigment.

The white pigment may be in the form of inorganic white powder or organic white powder. However, the inorganic white powder is preferred for its better heat resistance.

Examples of the inorganic white powder include titanium dioxide, magnesium oxide, basic lead carbonate ($2PbCO_3 \cdot Pb(OH)_2$), barium sulfate, aluminum oxide, alkaline earth metal halide (for example, barium flouro halide such as $BaFC\ell$, BaFBr), calcium carbonate, zinc oxide, antimony oxide, silicon dioxide, lithopone, magnesium silicate, basic silicate white lead, basic phosphate white lead, and aluminum silicate.

Operation of the irradiation image erase unit thus constructed will be described below.

An object (not shown) held against an exposure surface 60 of the image recording unit 16 is exposed to an irradiation, and an irradiation image of the object is recorded on a stimulable phosphor sheet S. The stimulable phosphor sheet S is then fed through the rollers 20, the guide members 22, 24, 26, 28, and the endless belts 30, 32, 36 to the image read-out unit 62. In the image read-out unit 62, the stimulable phosphor sheet S is scanned through the scanning optical system 63 by a laser beam emitted from the laser source 64 to emit light which is reflected directly or by the mirror 66 to the optical device 68. The light from the optical device 68 is then converted by the photomultiplier 70 to an electric signal that is fed to an image reproducing unit (not shown).

After the irradiation image has been read from the stimulable phosphor sheet S, the stimulable phosphor sheet S is fed by the feed belts 38, 40 through the guide members 44 and the guide members 46 to the nip rollers 116a, 116b. The stimulable phosphor sheet S as introduced into the inlet slot 122a is led by the nip rollers 116a, 116b to the guide members 114a, 114b. When the stimulable phosphor sheet S is pinched between the nip rollers 116a, 116b, the nip roller 116a is displaced by the sheet S away from the nip roller 116a against the tension of the coil spring 120a to push the detecting arm 128 of the microswitch 126. The microswitch 126 then generates a signal to energize the motor 130, whereupon the chain 136 is moved to rotate the second sprocket 138. Since the second sprocket 138 is fixed coaxially to the nip roller 116a, the nip roller 116a is rotated to deliver the stimulable phosphor sheet S toward the guide members 114a, 114b while the nip roller 116b is also being rotated.

As described above, the microswitch 126 is turned on to energize the motor 130 when the stimulable phosphor sheet S reaches the nip roller 116b and displaces the same. Upon rotation of the motor 130, the third spocket 140 also rotates the nip rollers 118a, 118b. As the leading end of the stimulable phosphor sheet S moves through the guide members 114a, 114b and reaches the nip rollers 118a, 118b, the trailing end of the stimulable phosphor sheet S leaves the nip rollers 116a, 116b. the nip roller 116b is now displaced in the direction of the arrow A (Fig. 3) toward the nip roller 116a under the resiliency of the coil spring 120a. As a result, the detecting arm 128 of the microswitch 126 is also displaced in the direction of the arrow A, and the microswitch 126 issues a signal to reverse the motor 130. The stimulable phosphor sheet S with its leading end gripped by the nip rollers 118a, 118b is then moved back toward the nip rollers 116a, 116b. When the trailing end of the sheet S is gripped again between the nip rollers 116a, 116b, the nip roller 116b and hence the detecting arm 128 are displaced again to enable the microswitch 126 to issue a signal for de-energizing the motor 130. Now, the stimulable phosphor sheet S is held between the nip rollers 116a, 116b and the nip rollers 118a, 118b.

The light sources 108a, 108b, 108c, and 108d are energized to emit light which is reflected sufficiently back and forth in the casing 102 to erase any residual irradiation image from the stimulable phosphor sheet S. More specifically, since the light sources 108a through 108d are disposed parallel to each other, light emitted from the light sources 108a through 108d directly illuminate the surface of the stimulable phosphor sheet S uniformly. Part of the emitted light is reflected by the mirror-finish surfaces 111, 170 or the diffusive reflecting surfaces 113 to fall on the sheet S (see Fig. 7). The residual irradiation image can therefore completely be erased from the stimulable phosphor sheet S. The erasure light emitted from the light sources 108a through 108d has a wavelength in the range of stimulating wavelengths of the stimulable phosphor sheet S.

As described above, the axial length or width $W_2$ of the nip rollers 116a, 116b is selected to be larger than the width of the sheet S and also larger than the width $W_1$ of the slot 122a. Therefore, the erasure light which illuminates the sheet S pinched between the nip rollers 116a, 116b is effectively prevented from leaking out of the erase unit 100 particularly toward the image read-out unit 62. Where the nip rollers 116a, 116b and 118a, 118b are formed of the flexibly resilient material such as rubber or provided with the fabrics having relatively long projecting thread ends, as shown in Figs. 4 and 5, any gap between the nip rollers is so small even when the sheet S is pinched therebetween that no erasure light will leak out toward the image read-out unit 62.

In synchronism with the energization of the light sources 108a through 108d, the motor-driven fans 160a through 160d are actuated to cause hot air heated by the light sources 108a through 108d in the casing 102 to flow in the direction of the arrow B (Fig. 3) into the duct 162 from which the hot air is discharged out of the erase unit 100. At the same time, cool air is introduced by the motor-driven fans 160a through 160d through the opening 154 into the casing 102 which is forcibly cooled by the introduced cool air.

Since the side panel 156 has the holes 158a through 158d for heat radiation, the inner reflecting surface on the side panel 156 has a reduced area which has a low light reflecting capability which would impair the intended function of the erase unit 100. However, the reflecting plate 166 with its inner surface having a mirror finish or diffusive reflecting layer is mounted on the side panel 156 parallel thereto. Therefore, the reflecting surface of a sufficient area is disposed over the holes 158a through 158d to provide a required light reflecting ability. Inasmuch as the reflecting plate 166 is positioned closely to the light sources 108a through 108d, it can reflect intensive erasure light toward the stimulable phosphor sheet S.

A prescribed period of time after the light sources 108a through 108d have been energized, the motor 130 is energized again to move the chain 136 to cause the nip rollers 118a, 118b to feed the stimulable phosphor sheet S toward the guide members 48. Since the residual image is completely erased from the stimulable phosphor sheet S upon arrival at the guide members 48, a next irradiation image can well be recorded on and stored in the stimulable phosphor sheet S which has been delivered into the image recording unit 16 through the endless belt 52 and the rollers 52, 58.

With the arrangement of the present invention, as described above, an irradiation image erase unit for use with a stimulable phosphor sheet is composed of a casing, two pairs of nip rollers disposed at slots in the casing for pinching the stimulable phosphor sheet and feeding the same through the slots, and erasure light sources disposed in the casing for emitting light. The light emitted from the erasure light sources falls, directly or through reflection, on the stimulable phosphor sheet to effectively erase any remaining irradiation image from the stimulable phosphor sheet so that a next irradiation image can well be recorded and stored in the stimulable phosphor sheet. Since the erase unit is completely shielded against light leakage toward the image read-out unit, there is no danger of noise which would otherwise be produced by the leakage of erasure light from the erasure unit into the image read-out unit during operation thereof. The erase unit as assembled in the casing can easily be incorporated in the irradiation image recording and read-out system, which itself may be compact in size as the erase unit takes up only a small installation space in the system.

Furthermore, the erase unit has feeders mounted on the casing and composed of the nip rollers for feeding the stimulable phosphor sheet, and a heat radiator on the casing for radiating the heat of the light sources from the casing. The stimulable phosphor sheet and surrounding components are therefore protected from damage due to the heat which would otherwise be trapped in the casing. As a consequence, the stimulable phosphor sheet and the surrounding parts are highly durable in operation.

The inner panel surfaces of the casing are of a mirror finish or coated with a thin film or sheet of a mirror finish or diffusive nature. The light emitted from the erasure light sources is, directly or through reflection from the inner panel surfaces, irradiated to the stimulable phosphor sheet to erase any residual irradiation image completely from the sheet. Since no residual irradiation image remains on the sheet, a next irradiation image can well be recorded and stored in the sheet.

The erase unit also includes a reflecting plate disposed in the casing adjacent to the erasure light sources. The light emitted from the erasure light sources falls, directly or via reflection from the reflecting plate, on the stimulable phosphor sheet for complete erasure of any residual irradiation image from the stimulable sheet. The casing has heat radiator holes for radiating heat from the casing, and the reflecting plate is disposed closely to the holes for a light reflecting capability over the holes.

The present invention may be incorporated in a bed-type irradiation image recording and read-out system, an irradiation image read-out system having an image read-out unit and an image erase unit and separated from an image recording unit, or an irradiation image erase unit independent of an image read-out unit and an image recording unit for the sole purpose of erasing residual irradiation images.

Although certain preferred embodiments have been shown and described, it should be understood that many changes and modifications may be made therein without departing from the scope of the appended claims.

## Claims

1. An irradiation image erase unit (100) for erasing a residual irradiation image from a stimulable phosphor sheet by exposing the same to erasure light in an irradiation image recording and read-out system having an image read-out unit (62) for irradiating stimulating rays to said stimulable phosphor sheet to cause the same to emit light representative of said irradiation image stored therein, for detecting said light emitted from said stimulable phosphor sheet, and for converting said emitted light photoelectrically to an electric signal, said irradiation image erase unit (100) comprising: a casing (102) having an inlet slot (112a) for passage therethrough of said stimulable phosphor sheet fed from said image read-out unit (62) into said casing (102); erasure light source means (108a-108d) disposed in said casing (102) for emitting the erasure light; and at least one feeder means (104) mounted on said casing at said inlet slot (112a) for delivering said stimulable phosphor sheet into said casing (102); characterised in that said feeder means (104) comprises a pair of rollers (116a,116b) disposed in confronting relation to said inlet slot, said rollers being held in rolling contact with each other for substantially closing said inlet slot (112a) from said image read-out unit (62), and a resilient member (120a) is mounted on said casing (102) for normally urging said rollers (116a,116b) against each other.

2. An irradiation image erase unit according to claim 1, wherein said resilient member comprises a coil spring held in engagement with a rotatable shaft of one of said rollers.

3. An irradiation image erase unit according to claim 1 including a rotative drive source mounted on said casing and having a drive shaft, a sprocket mounted on said drive shaft, another sprocket mounted on a rotatable shaft of one of said rollers, and a chain trained around said sprockets for rotating the rollers upon operation of said rotative drive source.

4. An irradiation image erase unit according to claim 3, including a displaceable tensioning sprocket disposed between said sprocket on said drive shaft and said sprocket on said roller shaft, said chain being trained around said displaceable tensioning sprocket.

5. An irradiation image erase unit according to claim 3, including a limit switch having a detecting arm held in contact with one of said rollers, said limit switch being electrically coupled to said rotative drive source for controlling the delivery of said stimulable phosphor sheet into and out of said casing and the positioning thereof in said casing.

6. An irradiation image erase unit according to claim 1, wherein said feeder means comprises a pair of rollers and a cover mounted on said casing in enclosing relation to said rollers, said cover having a slot.

7. An irradiation image erase unit according to claim 6, wherein said slot in said cover having a length smaller than the axial length of said rollers.

8. An irradiation image erase unit according to claim 6 or 7, wherein each of said rollers has an axial length longer than the width of said stimulable phosphor sheet so that the axial ends of said rollers will contact each other when said stimulable phosphor sheet is pinched between said rollers.

9. An irradiation image erase unit according to any one of claims 1 through 6, wherein each of said rollers is formed of a flexibly resilient material.

10. An irradiation image erase unit according to any one of claims 1 through 6, wherein each of said rollers includes a fibrous layer disposed at leastly partly around the circumferential surface thereof and having relatively long projecting thread ends.

**11.** An irradiation image erase unit according to claim 1, further comprising heat radiator means mounted on said casing for forcibly radiating heat out of said casing.

**12.** An irradiation image erase unit according to claim 11, wherein said heat radiator means includes openings defined in at least two different side panels of said casing, and at least one motor-driven fan disposed over the opening in one of said side panels.

**13.** An irradiation image erase unit according to claims 12, including a plurality of openings defined in said one side panels, a plurality of motor-driven fans disposed over said plurality of openings, and a duct mounted on said one side panel in surrounding relation to said plurality of openings.

**14.** An irradiation image erase unit according to claim 11, wherein said heat radiator means comprises openings defined in a side panel of said casing, a duct mounted on said casing in communication with said openings, and a motor-driven fan mounted on said duct at an outer distal end thereof.

**15.** An irradiation image erase unit according to claim 1, wherein said casing has inner panel surfaces for reflecting the light emitted from said erasure light source means.

**16.** An irradiation image erase unit according to claim 15, wherein each of said inner panel surfaces is of a mirror finish.

**17.** An irradiation image erase unit according to claim 15, wherein each of said inner panel surfaces comprises a reflecting film or sheet of a mirror finish attached to one of panels of said casing.

**18.** An irradiation image erase unit according to claim 15, wherein said casing has a diffusive reflecting surface in at least a portion thereof.

**19.** An irradiation image erase unit according to claim 18, wherein said diffusive reflecting surface lies substantially fully over an inner panel surface of said casing which faces said stimulable phosphor sheet positioned in said casing.

**20.** An irradiation image erase unit according to claim 19, wherein said diffusive reflecting surfaces lies substantially fully over all inner panel surfaces of said casing.

**21.** An irradiation image erase unit according to claim 18, wherein said diffusive reflecting surface is formed of a paint containing a white pigment and coated on said inner panel surface of the casing.

**22.** An irradiation image erase unit according to claim 18, wherein said diffusive reflecting surface is constructed of a panel containing a white pigment and attached to said inner panel surface of said casing.

**23.** An irradiation image erase unit according to claim 21 or 22, wherein said white pigment comprises inorganic white powder.

**24.** An irradiation image erase unit according to claim 23, wherein said inorganic white powder is made of at least one material selected from the group consisting of titanium dioxide, magnesium oxide, basic lead carbonate, barium sulfate, aluminum oxide, alkaline earth metal halide, calcium carbonate, zinc oxide, antimony oxide, silicon dioxide, lithopone, magnesium silicate, basic silicate white lead, basic phosphate white lead, and aluminum silicate.

**25.** An irradiation image erase unit according to claim 15, wherein said erasure light source means comprises at least two erasure light sources disposed in confronting relation to said stimulable phosphor sheet delivered into and positioned in said casing.

**26.** An irradiation image erase unit according to claim 15, wherein said casing has a service opening defined in a panel thereof, and an openable cover attached to said panel in covering relation to said service opening.

**27.** An irradiation image erase unit according to claim 1, wherein said casing has a heat radiating opening defined in at least one panel thereof, and a reflecting plate disposed between said panel and said erasure light source means in confronting relation to said opening.

**28.** An irradiation image erase unit according to claim 27, wherein said reflecting plate has a surface of a mirror finish facing said erasure light source means.

**29.** An irradiation image erase unit according to claim 27, wherein said reflecting plate has a thin reflecting film or sheet attached to a surface thereof facing said erasure light source means.

30. An irradiation image erase unit according to claim 27, 28 or 29, wherein said casing has an inner panel surface which is at least partially of a mirror finish.

31. An irradiation image erase unit according to claim 27, 28 or 29, wherein said casing has a thin reflecting film or sheet attached to at least a portion of an inner panel surface thereof.

32. An irradiation image erase unit according to claim 27, including a plurality of heat radiating openings defined in said one panel.

33. An irradiation image erase unit according to claim 27, including a motor-driven fan disposed over said heat radiating opening.

34. An irradiation image erase unit according to claim 27, including a duct mounted on said casing in communication with said heat radiating opening for discharging heated air out of said casing through said opening and said duct.

**Revendications**

1. Une unité d'effacement d'image de rayonnement (100) destinée à effacer une image de rayonnement résiduelle se trouvant sur une feuille à luminophore stimulable, par l'exposition de cette dernière à de la lumière d'effacement, dans un système d'enregistrement et de lecture d'image de rayonnement comportant une unité de lecture d'image (62) ayant pour fonctions de projeter des rayons de stimulation sur la feuille à luminophore stimulable pour que cette dernière émette de la lumière représentative de l'image de rayonnement qui est enregistrée à l'intérieur, de détecter la lumière émise par la feuille à luminophore stimulable, et de convertir la lumière émise en un signal électrique, par des moyens photoélectriques, cette unité d'effacement d'image de rayonnement (100) comprenant : un boîtier (102) ayant une fente d'entrée (112a) prévue pour le passage de la feuille à luminophore stimulable qui provient de l'unité de lecture d'image (62) et qui est introduite dans le boîtier (102); une structure de sources de lumière d'effacement (108a-108d), disposée dans le boîtier (102) pour émettre la lumière d'effacement; et au moins un dispositif d'entraînement (104) monté sur le boîtier au niveau de la fente d'entrée (112a), pour introduire la feuille à luminophore stimulable dans le boîtier (102); caractérisée en ce que le dispositif d'entraînement (104) comprend une paire de rouleaux (116a, 116b), disposés face à la fente d'entrée, ces rouleaux étant maintenus en contact roulant mutuel pour fermer pratiquement la fente d'entrée (112a) vis-à-vis de l'unité de lecture d'image (62), et un élément élastique (120a) est monté sur le boîtier (102) pour solliciter les rouleaux (116a, 116b) de façon qu'ils soient appliqués l'un contre l'autre dans les conditions de repos.

2. Une unité d'effacement d'image de rayonnement selon la revendication 1, dans laquelle l'élément élastique consiste en un ressort hélicoïdal qui est maintenu en contact avec un axe tournant de l'un des rouleaux.

3. Une unité d'effacement d'image de rayonnement selon la revendication 1, comprenant une source d'entraînement en rotation qui est montée sur le boîtier et qui comporte un axe d'entraînement, une roue à chaîne montée sur l'axe d'entraînement, une autre roue à chaîne montée sur un axe tournant de l'un des rouleaux, et une chaîne passant autour des roues à chaîne, pour faire tourner les rouleaux sous l'effet du fonctionnement de la source d'entraînement en rotation.

4. Une unité d'effacement d'image de rayonnement selon la revendication 3, comprenant une roue à chaîne de tension qui est disposée de façon mobile entre la roue à chaîne se trouvant sur l'axe d'entraînement et la roue à chaîne se trouvant sur l'axe de rouleau, et la chaîne passant autour de la roue à chaîne de tension mobile.

5. Une unité d'effacement d'image de rayonnement selon la revendication 3, comprenant un contact de fin de course ayant un doigt de détection qui est maintenu en contact avec l'un des rouleaux, ce contact de fin de course étant connecté électriquement à la source d'entraînement en rotation pour commander l'introduction de la feuille à luminophore stimulable dans le boîtier, et la sortie de cette dernière hors du boîtier, ainsi que son positionnement dans le boîtier.

6. Une unité d'effacement d'image de rayonnement selon la revendication 1, dans laquelle le dispositif d'entraînement comprend une paire de rouleaux et un capot monté sur le boîtier de façon à enfermer les rouleaux, et ce capot comporte une fente.

7. Une unité d'effacement d'image de rayonnement selon la revendication 6, dans laquelle la fente dans le capot a une longueur inférieure à la longueur axiale des rouleaux.

8. Une unité d'effacement d'image de rayonnement selon la revendication 6 ou 7, dans laquelle chacun des rouleaux a une longueur axiale supérieure à la largeur de la feuille à luminophore stimulable, de façon que les extrémités axiales des rouleaux viennent en contact mutuel lorsque la feuille à luminophore stimulable est pincée entre ces rouleaux.

9. Une unité d'effacement d'image de rayonnement selon l'une quelconque des revendications 1 à 6, dans laquelle chacun des rouleaux est formé par un matériau flexible et élastique.

10. Une unité d'effacement d'image de rayonnement selon l'une quelconque des revendications 1 à 6, dans laquelle chacun des rouleaux comprend une couche fibreuse disposée au moins en partie autour de la surface périphérique du rouleau, et comportant des fibres pelucheuses relativement longues qui s'étendent à partir de la surface de la couche.

11. Une unité d'effacement d'image de rayonnement selon la revendication 1, comprenant en outre des moyens d'évacuation de chaleur qui sont montés sur le boîtier pour effectuer une évacuation de chaleur forcée à partir du boîtier.

12. Une unité d'effacement d'image de rayonnement selon la revendication 11, dans laquelle les moyens d'évacuation de chaleur comprennent des ouvertures qui sont définies dans au moins deux panneaux latéraux différents du boîtier, et au moins un ventilateur entraîné par un moteur qui est disposé sur l'ouverture formée dans un premier des panneaux latéraux.

13. Une unité d'effacement d'image de rayonnement selon la revendication 12, comprenant un ensemble d'ouvertures définies dans le premier panneau latéral, un ensemble de ventilateurs entraînés par des moteurs, disposés sur l'ensemble d'ouvertures, et un conduit monté sur le premier panneau latéral de façon à entourer l'ensemble d'ouvertures.

14. Une unité d'effacement d'image de rayonnement selon la revendication 11, dans laquelle les moyens d'évacuation de chaleur comprennent des ouvertures qui sont définies dans un panneau latéral du boîtier, un conduit qui est monté sur le boîtier, en communication avec les ouvertures, et un ventilateur entraîné par un moteur, monté dans le conduit, à une extrémité distale extérieure de ce dernier.

15. Une unité d'effacement d'image de rayonnement selon la revendication 1, dans laquelle le boîtier comporte deux surfaces de panneaux intérieurs qui sont destinées à réfléchir la lumière émise par la structure de sources de lumière d'effacement.

16. Une unité d'effacement d'image de rayonnement selon la revendication 15, dans laquelle chacune des surfaces de panneaux intérieures présente une finition miroir.

17. Une unité d'effacement d'image de rayonnement selon la revendication 15, dans laquelle chacune des surfaces de panneaux intérieures comporte une feuille ou une pellicule réfléchissante ayant une finition miroir qui est fixée sur le panneau considéré du boîtier.

18. Une unité d'effacement d'image de rayonnement selon la revendication 15, dans laquelle au moins une partie du boîtier présente une surface réfléchissante diffusante.

19. Une unité d'effacement d'image de rayonnement selon la revendication 18, dans laquelle la surface réfléchissante diffusante s'étend pratiquement sur la totalité d'une surface de panneau intérieure du boîtier qui fait face à la feuille à luminophore stimulable positionnée dans le boîtier.

20. Une unité d'effacement d'image de rayonnement selon la revendication 19, dans laquelle la surface réfléchissante diffusante s'étend pratiquement complètement sur toutes les surfaces de panneaux intérieures du boîtier.

21. Une unité d'effacement d'image de rayonnement selon la revendication 18, dans laquelle la surface réfléchissante diffusante est formée par une peinture contenant un pigment blanc et déposée sur la surface de panneau intérieure précitée du boîtier.

22. Une unité d'effacement d'image de rayonnement selon la revendication 18, dans laquelle la surface réfléchissante diffusante est constituée par un panneau contenant un pigment blanc et fixé sur la surface de panneau intérieure précitée du boîtier.

23. Une unité d'effacement d'image de rayonnement selon la revendication 21 ou 22, dans laquelle le pigment blanc consiste en une poudre blanche minérale.

24. Une unité d'effacement d'image de rayonnement selon la revendication 23, dans laquelle la poudre blanche minérale est constituée par au moins une matière sélectionnée dans le groupe comprenant le dioxyde de titane, l'oxyde de magnésium, le carbonate de plomb basique, le sulfate de baryum, l'oxyde d'aluminium, un halogénure de métal alcalino-terreux, le carbonate de calcium, l'oxyde de zinc, l'oxyde d'antimoine, le dioxyde de silicium, le lithopone, le silicate de magnésium, le blanc de plomb du type silicate basique, le blanc de plomb du type phosphate basique, et le silicate d'aluminium.

25. Une unité d'effacement d'image de rayonnement selon la revendication 15, dans laquelle la structure de sources de lumière d'effacement comprend au moins deux sources de lumière d'effacement qui sont disposées face à la feuille à luminophore stimulable qui est introduite et positionnée dans le boîtier.

26. Une unité d'effacement d'image de rayonnement selon la revendication 15, dans laquelle le boîtier comporte une ouverture de service qui est définie dans un panneau de celui-ci, et un couvercle que l'on peut ouvrir, fixé sur ce panneau de façon à couvrir l'ouverture de service.

27. Une unité d'effacement d'image de rayonnement selon la revendication 1, dans laquelle le boîtier comporte une ouverture d'évacuation de chaleur qui est définie dans au moins un panneau de celui-ci, et une plaque réfléchissante disposée entre le panneau précité et la structure de sources de lumière d'effacement, face à l'ouverture précitée.

28. Une unité d'effacement d'image de rayonnement selon la revendication 27, dans laquelle la plaque réfléchissante présente une surface ayant une finition miroir qui fait face à la structure de sources de lumière d'effacement.

29. Une unité d'effacement d'image de rayonnement selon la revendication 27, dans laquelle une feuille ou une pellicule réfléchissante mince est fixée sur une surface de la plaque réfléchissante qui fait face à la structure de sources de lumière d'effacement.

30. Une unité d'effacement d'image de rayonnement selon la revendication 27, 28 ou 29, dans laquelle le boîtier comporte une surface de panneau intérieure qui présente au moins partiellement une finition miroir.

31. Une unité d'effacement d'image de rayonnement selon la revendication 27, 28 ou 29, dans laquelle une feuille ou une pellicule mince réfléchissante est fixée sur au moins une partie d'une surface de panneau intérieure du boîtier.

32. Une unité d'effacement d'image de rayonnement selon la revendication 27, comprenant un ensemble d'ouvertures d'évacuation de chaleur définies dans le panneau précité.

33. Une unité d'effacement d'image de rayonnement selon la revendication 27, comprenant un ventilateur entraîné par un moteur, placé sur l'ouverture d'évacuation de chaleur.

34. Une unité d'effacement d'image de rayonnement selon la revendication 27, comprenant un conduit monté sur le boîtier, en communication avec l'ouverture d'effacement de chaleur, pour évacuer hors du boîtier l'air chauffé, à travers l'ouverture et le conduit précités.

**Patentansprüche**

1. Vorrichtung (100) zur Strahlungsbildlöschung, um das restliche Strahlungsbild von einer anregbaren Phosphorschicht zu löschen, indem diese einer löschenden Strahlung in einem Strahlungsbildaufzeichnungs- und Auslesesystem ausgesetzt wird, das eine Bildausleseeinheit (62) aufweist, um anregende Strahlen auf die anregbare Phosphorschicht zu strahlen, um zu bewirken, daß diese Licht emittiert, das dem darin gespeicherten Strahlungsbild entspricht, um das von der anregbaren Phosphorschicht emittierte Licht anzuzeigen und dieses emittierte Licht photoelektrisch in ein elektrisches Signal umzuwandeln, wobei die Vorrichtung (100) zur Strahlungsbildlöschung umfaßt: ein Gehäuse (102) mit einem Einlaßschlitz (112a) zum Durchgang der anregbaren Phosphorschicht, die von der Bildausleseeinheit (62) in das Gehäuse (102) geführt wird; eine Einrichtung als Quelle der löschenden Strahlen (108a bis 108d), die im Gehäuse (102) angeordnet ist, um die löschenden Strahlen zu emittieren; und mindestens eine Zufuhreinrichtung (104), die am Einlaßschlitz (112a) am Gehäuse angebracht ist, um die anregbare Phosphorschicht in das Gehäuse (102) einzuführen, dadurch gekennzeichnet, daß die Zufuhreinrichtung (104) ein Paar Rollen (116a,116b), die dem Einlaßschlitz gegenüberstehend angeordnet sind, wobei diese Rollen in rollenden Kontakt zueinander gehalten werden, so daß der Einlaßschlitz (112a) im wesentlichen von der Bildausleseeinheit (62) abgeschlossen ist, und ein elastisches Teil (120a) umfaßt, das auf dem Gehäuse (102) angebracht ist, um diese Rollen (116a,116b) normalerweise aneinanderzudrücken.

2. Vorrichtung zur Strahlungsbildlöschung nach Anspruch 1, worin das elastische Teil eine Schraubenfeder umfaßt, die in Berührung mit der drehbaren Welle einer der Rollen gehalten wird.

3. Vorrichtung zur Strahlungsbildlöschung nach Anspruch 3, die eine rotierende Antriebsquelle umfaßt, die auf dem Gehäuse befestigt ist, und eine Antriebswelle, eine Zahnrolle, die auf der Antriebswelle befestigt ist, eine weitere Zahnrolle, die auf der drehbaren Welle einer der Rollen befestigt ist, und eine Kette aufweist, die um die Zahnrollen gezogen ist, um die Rollen bei Betrieb der rotierenden Antriebsquelle zu drehen.

4. Vorrichtung zur Strahlungsbildlöschung nach Anspruch 3, die eine verschiebbare Spann-Zahnrolle umfaßt, die zwischen der Zahnrolle auf der Antriebswelle und der Zahnrolle auf der Rollenwelle angeordnet ist, wobei die Kette um diese verschiebbare Spann-Zahnrolle gespannt ist.

5. Vorrichtung zur Strahlungsbildlöschung nach Anspruch 3, die einen Grenztaster mit einem Erfassungsarm umfaßt, der mit den Rollen in Kontakt gehalten wird, wobei dieser Grenztaster elektrisch mit der rotierenden Antriebsquelle in Kontakt gehalten wird, um die Zufuhr der anregbaren Phosphorschicht in das und aus dem Gehäuse und ihre Anordnung im Gehäuse zu kontrollieren.

6. Vorrichtung zur Strahlungsbildlöschung nach Anspruch 1, worin die Zufuhreinrichtung ein Paar Rollen und eine Abdeckung umfaßt, die auf dem Gehäuse befestigt ist und die Rollen umgibt, wobei diese Abdeckung einen Schlitz aufweist.

7. Vorrichtung zur Strahlungsbildlöschung nach Anspruch 6, worin der Schlitz in der Abdeckung eine Länge aufweist, die geringer als die axiale Länge der Rollen ist.

8. Vorrichtung zur Strahlungsbildlöschung nach Anspruch 6 oder 7, worin jede der Rollen eine axiale Länge aufweist, die größer als die Breite der anregbaren Phosphorschicht ist, so daß die axialen Enden der Rollen einander berühren, wenn die anregbare Phosphorschicht zwischen den Rollen zusammengedrückt wird.

9. Vorrichtung zur Strahlungsbildlöschung nach einem der Ansprüche 1 bis 6, worin jede der Rollen aus einem flexiblen elastischen Material gebildet ist.

10. Vorrichtung zur Strahlungsbildlöschung nach einem der Ansprüche 1 bis 6, worin jede der Rollen eine Faserschicht umfaßt, die zumindest teilweise auf ihrer Außenoberfläche angeordnet ist, und relativ weit vorstehende Gewindeenden aufweist.

11. Vorrichtung zur Strahlungsbildlöschung nach Anspruch 1, die außerdem eine Wärmestrahlungseinrichtung umfaßt, die auf dem Gehäuse angebracht ist, um zwangsläufig die Wärme aus dem Gehäuse zu strahlen.

12. Vorrichtung zur Strahlungsbildlöschung nach Anspruch 11, worin die Wärmestrahlungseinrichtung Öffnungen, die in zumindest zwei unterschiedlichen Seitenplatten des Gehäuses definiert sind, und zumindest einen motorgetriebenen Lüfter umfaßt, der über der Öffnung in einer der Seitenplatten angeordnet ist.

13. Vorrichtung zur Strahlungsbildlöschung nach Anspruch 12, die eine Vielzahl von Öffnungen, die in einer Seitenplatte definiert sind, eine Vielzahl motorgetriebener Lüfter, die über die Vielzahl von Öffnungen angeordnet sind, und eine Leitung umfaßt, die die Vielzahl von Öffnungen umgebend auf einer Seitenplatte angebracht ist.

14. Vorrichtung zur Strahlungsbildlöschung nach Anspruch 11, worin die Wärmestrahlungseinrichtung Öffnungen, die in der Seitenplatte des Gehäuses definiert sind, eine Leitung, die auf dem Gehäuse in Verbindung mit den Öffnungen angebracht ist, und einen motorgetriebenen Lüfter umfaßt, der an derem äußeren Ende auf der Leitung angebracht ist.

15. Vorrichtung zur Strahlungsbildlöschung nach Anspruch 1, worin das Gehäuse innere Plattenoberflächen aufweist, um das Licht zu reflektieren, das von der Quelle der löschenden Strahlen emittiert wird.

16. Vorrichtung zur Strahlungsbildlöschung nach Anspruch 15, worin jede innere Plattenoberfläche einen Spiegelglanz aufweist.

17. Vorrichtung zur Strahlungsbildlöschung nach Anspruch 15, worin jede innere Plattenoberfläche einen reflektierenden Film oder eine Platte mit Spiegelglanz umfaßt, die auf einer Platte des Gehäuses angebracht ist.

18. Vorrichtung zur Strahlungsbildlöschung nach Anspruch 15, worin das Gehäuse in zumindest einem Abschnitt eine diffus reflektierende Oberfläche aufweist.

19. Vorrichtung zur Strahlungsbildlöschung nach Anspruch 18, worin diese diffus reflektierende Oberfläche im wesentlichen vollständig über der inneren Plattenoberfläche des Gehäuses liegt, die der anregbaren Phosphorschicht gegenübersteht, die im Gehäuse angeordnet ist.

20. Vorrichtung zur Strahlungsbildlöschung nach Anspruch 19, worin diese diffus reflektierenden Oberflächen im wesentlichen vollständig über allen inneren Plattenoberflächen des Gehäuses liegen.

21. Vorrichtung zur Strahlungsbildlöschung nach Anspruch 18, worin diese diffus reflektierende Oberfläche aus einem Anstrich gebildet ist, der ein weißes Pigment enthält und auf der inneren Plattenoberfläche des Gehäuses aufgebracht ist.

22. Vorrichtung zur Strahlungsbildlöschung nach Anspruch 18, worin die diffus reflektierende Oberfläche aus einer Platte aufgebaut ist, die ein weißes Pigment enthält und an die innere Plattenoberfläche des Gehäuses angebracht ist.

23. Vorrichtung zur Strahlungsbildlöschung nach Anspruch 21 oder 22, worin das weiße Pigment ein anorganisches weißes Pulver umfaßt.

24. Vorrichtung zur Strahlungsbildlöschung nach Anspruch 23, worin das anorganische weiße Pulver aus zumindest einem Material gefertigt ist, das aus der Gruppe ausgewählt ist, die aus Titandioxid, Magnesiumoxid, basischem Bleicarbonat, Bariumsulfat, Aluminiumoxid, Erdalkalimetallhalogenid, Calciumcarbonat, Zinkoxid, Antimonoxid, Siliciumdioxid, Zinkweiß, Magnesiumsilicat, basischem Silicatbleiweiß, basischem Phosphatbleiweiß und Aluminiumsilicat besteht.

25. Vorrichtung zur Strahlungsbildlöschung nach Anspruch 15, worin die Quelle der löschenden Strahlen zumindest zwei Quellen löschender Strahlen umfaßt, die der anregbaren Phosphorschicht gegenüberstehend angeordnet sind, die in das Gehäuse eingeführt und im Gehäuse angeordnet wird.

26. Vorrichtung zur Strahlungsbildlöschung nach Anspruch 15, worin das Gehäuse eine Wartungsöffnung, die in einer Platte definiert wird, und einen zu öffnenden Deckel umfaßt, der, die Wartungsöffnung abdeckend, an die Platte angebracht ist.

27. Vorrichtung zur Strahlungsbildlöschung nach Anspruch 1, worin das Gehäuse eine Wärmestrahlungsöffnung, die in zumindest einer Platte definiert wird, und eine reflektierende Platte aufweist, die zwischen der Platte und der Quelle der löschenden Strahlen der Öffnung gegenüberstehend angeordnet ist.

28. Vorrichtung zur Strahlungsbildlöschung nach Anspruch 27, worin die reflektierende Platte eine Oberfläche mit Spiegelglanz aufweist, die der Quelle der löschenden Strahlen gegenübersteht.

29. Vorrichtung zur Strahlungsbildlöschung nach Anspruch 27, worin die reflektierende Platte einen dünnen reflektierenden Film oder eine dünne reflektierende Platte aufweist, die an ihrer Oberfläche angebracht ist und der Quelle der löschenden Strahlen gegenübersteht.

30. Vorrichtung zur Strahlungsbildlöschung nach Anspruch 27, 28 oder 29, worin das Gehäuse eine innere Plattenoberfläche aufweist, die zumindest teilweise einen Spiegelglanz aufweist.

31. Vorrichtung zur Strahlungsbildlöschung nach Anspruch 27, 28, 29, worin das Gehäuse einen dünnen reflektierenden Film oder eine dünne reflektierende Platte aufweist, die an zumindest einem Teil seiner inneren Plattenoberfläche angebracht ist.

32. Vorrichtung zur Strahlungsbildlöschung nach Anspruch 27, die eine Vielzahl von Wärmestrahlungsöffnungen aufweist, die in dieser einen Platte definiert sind.

33. Vorrichtung zur Strahlungsbildlöschung nach Anspruch 27, die einen motorgetriebenen Lüfter umfaßt, der über der Wärmestrahlungsöffnung angeordnet ist.

34. Vorrichtung zur Strahlungsbildlöschung nach Anspruch 27, die eine Leitung umfaßt, die auf dem Gehäuse und in Verbindung mit der Wärmestrahlungsöffnung angebracht ist, um die erwärmte Luft durch die Öffnung und die Leitung aus dem Gehäuse abzugeben.

# Fig.1

# Fig.2

# Fig.3

Fig.5

Fig.4

Fig.6

# Fig.7

# Fig.8

# Fig.9

# Fig.10

102

108d

102c

111 (113)

114a

122a